Europäisches Patentamt

(19) European Patent Office

Office européen des brevets

(11) Numéro de publication : **0 283 358 B1**

# (12) FASCICULE DE BREVET EUROPEEN

(45) Date de publication du fascicule du brevet :
**27.11.91 Bulletin 91/48**

(51) Int. Cl.$^5$ : **H02H 3/10**

(21) Numéro de dépôt : **88400420.1**

(22) Date de dépôt : **23.02.88**

(54) **Déclencheur statique comportant un circuit de détection d'un courant homopolaire.**

(30) Priorité : **09.03.87 FR 8703291**

(43) Date de publication de la demande :
**21.09.88 Bulletin 88/38**

(45) Mention de la délivrance du brevet :
**27.11.91 Bulletin 91/48**

(84) Etats contractants désignés :
**BE CH DE ES GB IT LI SE**

(56) Documents cités :
**EP-A- 0 099 784**
**EP-A- 0 195 693**
**FR-A- 2 344 993**
**US-A- 4 347 540**

(73) Titulaire : **MERLIN GERIN**
**Rue Henri Tarze**
**F-38050 Grenoble Cédex (FR)**

(72) Inventeur : **Tripodi, Paul**
**Merlin Gerin Service Brevets**
**F-38050 Grenoble Cédex (FR)**

(74) Mandataire : **Kern, Paul et al**
**Merlin Gerin Sce. Brevets 20, rue Henri Tarze**
**F-38050 Grenoble Cédex (FR)**

## Description

L'invention concerne un déclencheur statique pour un disjoncteur électrique multipolaire de protection d'un réseau électrique à courant alternatif comprenant :

— un capteur de courant par pôle, qui engendre un signal proportionnel au courant parcourant le conducteur associé du réseau protégé par le disjoncteur ;

— un circuit de détection et de redressement auquel sont appliqués lesdits signaux pour fournir d'une part des signaux représentatifs des courants parcourant les conducteurs à protéger et d'autre part un signal homopolaire en présence d'un défaut d'isolement ;

— un ensemble électronique de traitement auquel sont appliqués les signaux de sortie du circuit de détection et de redressement pour assurer des fonctions de déclenchement temporisé et/ou instantané et délivrant, avec ou sans retard, un ordre de déclenchement du disjoncteur lors du dépassement de seuils prédéterminés par les signaux représentatifs des courants parcourant les conducteurs ou par le signal homopolaire.

Dans les déclencheurs statiques connus, un transformateur de courant est associé à chacun des conducteurs du réseau à protéger, le signal qu'il délivre étant appliqué à un pont redresseur à double alternance, les signaux redressés étant utilisés par un ensemble électronique de traitement pour réaliser les fonctions long retard, court retard et/ou instantané du déclencheur. La détection d'un défaut à la terre s'effectue généralement soit au moyen d'un transformateur de courant additionnel, sommateur, dont les enroulements primaires sont constitués par l'ensemble des conducteurs du réseau à protéger et dont l'enroulement secondaire fournit un signal de défaut différentiel lorsque la somme des courants parcourant les enroulements primaires n'est pas nulle, soit au moyen d'une résistance de mesure disposée dans un conducteur commun à l'une des extrémités de chaque enroulement secondaire des transformateurs de courant associés aux différents conducteurs.

La présente invention à pour but un déclencheur statique comportant un nouveau moyen, particulièrement simple de détection d'un défaut à la terre.

Selon l'invention, le déclencheur statique est caractérisé en ce que le circuit de détection et de redressement comporte des premiers moyens de redressement produisant un premier signal représentatif de la somme des alternances positives des signaux de sortie de l'ensemble des capteurs de courant, des seconds moyens de redressement produisant un second signal représentatif, en valeur absolue, de la somme des alternances négatives des signaux de sortie de l'ensemble des capteurs de courant, et des moyens effectuant la différence entre les premier et second signaux de somme de manière à produire ledit signal homopolaire.

Selon un mode de réalisation préféré, le circuit de détection et de redressement comporte un groupe de diodes associées à chaque capteur de courant, chaque groupe comportant une première et une seconde diodes disposées en série et dont le point commun est relié à une première sortie du capteur de courant associé, une troisième et une quatrième diodes disposées en série et dont le point commun est relié à une seconde sortie du capteur de courant associé, les anodes des seconde et quatrième diodes étant reliées et leur point commun connecté à un premier conducteur constituant le potentiel de sortie négatif du circuit de détection et de redressement, les cathodes des premières diodes des différents groupes étant reliées à un second conducteur et les cathodes des troisièmes diodes des différents groupes étant reliées à un troisième conducteur distinct du second, des moyens effectuent la différence entre les courants circulant dans les second et troisième conducteurs, constituant respectivement lesdits premier et second signaux de somme, de manière à produire ledit signal homopolaire.

Par introduction d'une résistance de mesure entre le point commun aux anodes des seconde et quatrième diodes de chaque groupe et le premier conducteur, il est possible d'obtenir un redressement indépendant double alternance de chaque phase et du neutre, la tension aux bornes de cette résistance de mesure étant alors représentative du courant de phase ou de neutre.

D'autres avantages et caractéristiques ressortiront plus clairement de la description qui va suivre d'un mode de mise en oeuvre de l'invention, donné à titre d'exemple non limitatif et représenté aux dessins annexés dans lesquels :

— la figure 1 est un schéma bloc d'un déclencheur statique ;

— la figure 2 représente un mode de réalisation préférentiel du circuit de détection et de redressement du déclencheur selon la figure 1 ;

— les figures 3 et 4 représentent les formes d'ondes obtenues en utilisant les principes de la présente invention dans un disjoncteur tripolaire, sans neutre.

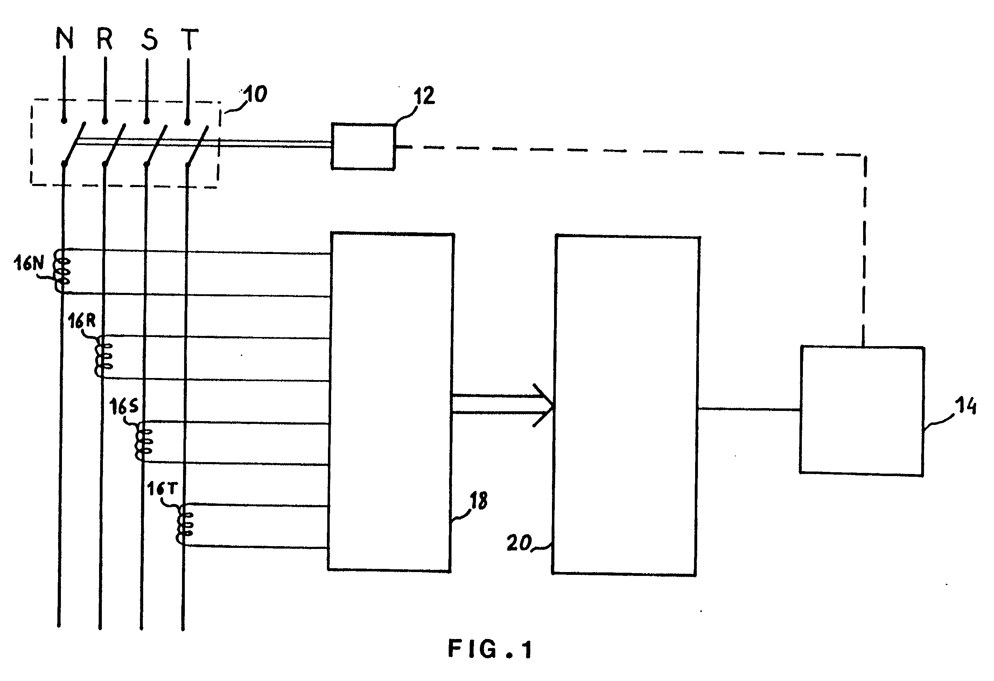

Sur la figure 1, un disjoncteur 10 de protection des lignes R, S, T et N d'un réseau alternatif triphasé avec neutre est actionné par un mécanisme de commande 12 piloté par un relais polarisé 14 de manière à commander le déclenchement du disjoncteur en cas de surcharge, de court-circuit ou de défaut à la terre.

L'intensité du courant circulant dans chaque ligne est détectée par un transformateur de courant 16R, 16S, 16T ou 16N. Les enroulements secondaires des transformateurs de courants, tous branchés dans le même sens, sont connectés à un circuit 18 de détection et de redressement qui fournit à l'ensemble électronique de traitement 20 du déclencheur des signaux représentatifs des courants de phase, de terre, et de défaut à la terre, ainsi qu'une tension d'alimentation dans le cas d'un déclencheur à propre courant. L'ensemble électronique de traitement 20 assure, de manière connue, les fonctions de déclenchement long retard, court retard et instantané de manière à élaborer un ordre de déclenchement du disjoncteur lors d'un dépassement de seuils prédéterminés. L'ordre de déclenchement ainsi produit est appliqué au relais polarisé 14 de manière à actionner le disjoncteur.

De tels ensembles de traitement sont bien connus, qu'ils soient du type analogique comme dans le brevet français 2530089 ou du type numérique à microprocesseur comme dans la demande de brevet français 2578092.

L'ensemble électronique de traitement 20 assure également la protection différentielle du réseau à partir d'un signal de mesure du courant homopolaire qui lui est fourni par le circuit 18. En l'absence de défaut d'isolement sur le réseau, le courant homopolaire est nul. La présence d'un défaut d'isolement entre un conducteur actif R, S, T, N du réseau et une masse ou la terre provoque la détection par le circuit 18 d'un courant résiduel, ou homopolaire. L'ensemble de traitement 20 utilise ce signal de mesure du courant homopolaire pour assurer, de manière connue, un déclenchement instantané ou temporisé du disjoncteur lorsque ce signal de mesure dépasse des seuils prédéterminés.

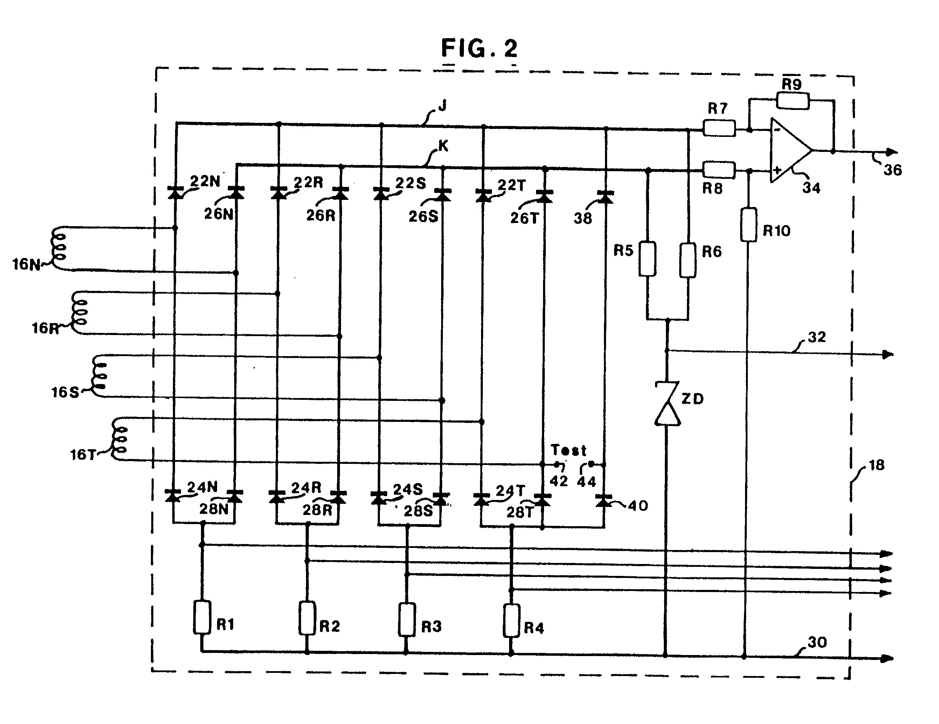

La figure 2 représente plus en détail un mode de réalisation particulier du circuit 18 de détection et de redressement du déclencheur statique selon la figure 1, mettant en oeuvre les principes de l'invention.

Pour un déclencheur tétrapolaire, le circuit 18 comporte quatre groupes de diodes associées respectivement à l'un des enroulements secondaires des transformateurs d'intensité 16R, 16S, 16T, et 16N.

Les quatre groupes étant identiques, seul l'un d'eux va être décrit plus en détail, les mêmes références complétées par les lettres R, S, T ou N étant utilisées sur la figure 2 selon que le groupe considéré est associé à la ligne R, S, T ou N. Dans chaque groupe, l'une des extremités de l'enroulement secondaire 16 est reliée à l'anode d'une diode 22 et à la cathode d'une diode 24, tandis que l'autre extrémité de l'enroulement 16 est reliée à l'anode d'une diode 26 et à la cathode d'une diode 28.

Les cathodes de toutes les diodes 22 (22R, 22S, 22T et 22N) sont connectées à un même conducteur J tandis que les cathodes de toutes les diodes 26 (26R, 26S, 26T, et 26N) sont connectées à un même conducteur K. Les anodes des diodes 24N et 28N sont reliées et leur point commun connecté à un conducteur 30 constituant le potentiel de sortie négatif du circuit 18.

Dans le mode de réalisation préféré représenté sur la figure, la liaison des diodes 24N et 28N au conducteur 30 s'effectue par l'intermédiaire d'une résistance de mesure R1. De manière analogue le point commun aux anodes des diodes 24R et 28R, respectivement 24S et 28S ou 24T et 28T, est connecté par l'intermédiaire d'une résistance de mesure R2, respectivement R3 ou R4, au conducteur 30. Grâce à cette disposition, le courant circulant respectivement dans les résistances R1 à R4 correspond au courant redressé double alternance du transformateur de courant associé. Les résistances R1 à R4 sont des résistances de mesures précises de faible valeur (quelque ohms). Ces résistances, de même valeur, convertissent les signaux de courant détectés en signaux de tension. Ces signaux de tension, négatifs par rapport au potentiel du conducteur 30 et constituant des signaux de mesures indépendants sur chaque phase, sont utilisés de manière connue par le circuit de traitement 20 pour assurer les fonctions long retard, court retard et instantané du déclencheur. Bien que le mode de réalisation représenté soit particulièrement simple, l'invention n'est en aucune manière limitée à celui-ci et les signaux représentatifs des courants parcourant les conducteurs (R, S, T, N) peuvent être obtenus de toute manière connue.

Selon l'invention, les conducteurs J et K sont distincts de manière à ce que le courant Ij circulant dans le conducteur J corresponde à la somme des alternances positives des courants détectés par les transformateurs de courant 16, tandis que que le courant Ik circulant dans le conducteur K correspond, en valeur absolue, à la somme des alternances négatives des courants détectés. La différence Ih entre les courants Ij et Ik peut être considérée comme l'image du courant homopolaire du réseau. Les conducteurs J et K sont respectivement reliés au conducteur 30 par des résistances R5 et R6, de même valeur, de sorte que la différence de tension Vh existant entre les conducteurs J et K est une représentation du courant homopolaire.

Dans le mode particulier de réalisation représenté sur la figure 2, la tension Vh est appliquée aux bornes d'un amplificateur différentiel qui fournit en sortie, sur la ligne 36, une tension de mesure pouvant être utilisée par le circuit de traitement 20 pour le déclenchement du disjoncteur en cas de défaut à la terre. Ainsi que représenté sur la figure le conducteur J est connecté par l'intermédiaire d'une résistance R7 à l'entrée inverseuse d'un amplificateur opérationnel 34 tandis que le conducteur K est connecté par l'intermédiaire d'une résistance R8, de même valeur que R7, à l'entrée non inverseuse de l'amplificateur. Cette dernière étant reliée par une résistance R10 au conducteur 30. Une résistance de contre-réaction R9, de même valeur que R10, est disposée entre l'entrée inverseuse et la sortie de l'amplificateur. On obtient ainsi entre les conducteurs 30 et 36 une tension proportionnelle à Vh et, en conséquence, représentative du courant homopolaire dans le réseau à protéger.

Dans le mode de réalisation préférentiel représenté, le point commun aux résistances R5 et R6 est connecté au conducteur 30 par l'intermédiaire d'une diode Zener ZD, de manière à fournir entre le conducteur 30 et un conducteur 32 relié audit point commun une tension d'alimentation utilisée pour alimenter le déclencheur qui est dans ces conditions à propre courant. L'interposition de cette diode ZD n'a pas d'influence sur la tension de mesure Vh. En effet, si V est la tension aux bornes de la diode Zener ZD, la tension Vh est donnée par :

$$Vh = Ij\,R6 + V - (Ik\,R5 + V) = Ij\,R6 - Ik\,R5$$

avec R5 = R6 on obtient bien : Vh = R5 (Ij − Ik).

Dans le mode de réalisation préférentiel représenté sur la figure 2 le déclencheur comporte deux bornes test 42, 44 susceptibles de coopérer avec un simulateur de défaut extérieur (non représenté) destiné à injecter un courant continu de défaut artificiel pour le contrôle du fonctionnement du déclencheur. Une première borne 42 de test est relié au point commun des diodes 26 et 28 de l'un des groupes de diodes, sur la figure les diodes 26T et 28T, tandis que la deuxième borne 44 de test est reliée au point commun à deux diodes 38 et 40 disposées en série entre le conducteur J et l'anode de la diode 28 considérée (soit 28T sur la figure).

Pour vérifier le fonctionnement de la fonction de protection contre les surintensités du déclencheur le simulateur de défaut extérieur est branché entre les bornes de test 42 et 44 de manière à ce que sa polarité positive soit appliquée à la borne 44 et sa polarité négative à la borne 42. Lorsqu'un courant continu de test est appliqué au déclencheur par le simulateur de défaut, ce courant circule donc à partir de la borne 44, dans la diode 38, le conducteur J, la résistance R6, la diode Zener ZD, la résistance R4 et la diode 28T pour ressortir par la borne de test 42. La tension existant aux bornes de la résistance de mesure R4 est utilisée pour vérifier le bon fonctionnement de l'ensemble électronique de traitement 20, notamment les différents déclenchements long retard, court retard et instantané. Un courant circulant dans le conducteur J tandis qu'aucun courant ne circule dans le condusteur K, une différence de tension positive est appliquée à l'entrée de l'amplificateur opérationnel 34, se traduisant par une tension négative en sortie sur le conducteur 36. Le seuil de déclenchement différentiel dans l'ensemble 20 étant un seuil positif, cette tension négative n'entraîne pas l'actionnement de la fonction différentielle.

Pour vérifier le fonctionnement de la fonction de protection différentielle du déclencheur on inverse le sens d'injection du courant de test en appliquant la polarité positive du simulateur de défaut à la borne 42 et sa polarité négative à la borne 44. Le courant continu de test circule alors à partir de la borne 42, dans la diode 26T, le conducteur K, la résistance R5, la diode Zener ZD, la résistance R4 et la diode 40 pour ressortir par la borne de test 44. Le déséquilibre entre les courants circulants dans les conducteurs J et K crée une différence de tension négative aux bornes de l'amplificateur 34, se traduisant par un signal de tension positif sur le conducteur 36. Ce signal permet de tester le seuil et la temporisation de la protection différentielle de l'ensemble 20. Dans ce cas l'intensité du courant test est comprise entre la sensibilité du circuit de déclenchement différentiel et le courant image correspondant à l'intensité nominale du disjoncteur, de manière à ce que le passage du courant test dans la résistance de mesure R4 n'ait aucun effet sur l'ensemble 20, la tension aux bornes de la résistance R4 restant inférieure au seuil de déclenchement long retard de l'ensemble 20. Ainsi l'inversion du sens de circulation du courant test par simple changement de polarité du simulateur permet de tester séparément les fonctions de protection différentielle et de protection contre les surintensités du déclencheur avec une seule paire de bornes test.

Il faut que le courant de test circule dans un seul des conducteurs J ou K, créant ainsi un déséquilibre, pour permettre la vérification du fonctionnement de la fonction différentielle du déclencheur. Il est bien évident que ceci peut être réalisé par d'autres moyens que ceux représentés sur la figure. A titre d'exemple, la première borne test pourrait être reliée au point commun aux diodes 22 et 24 d'un groupe, l'autre borne test étant alors reliée au point commun à deux diodes disposées en série entre le conducteur K et l'anode de la diode 24.

Bien que l'on ait représenté l'invention dans les figures 1 et 2 dans son application à un réseau triphasé avec neutre, il est bien évident qu'elle n'est pas limitée à ce type de réseau. Au contraire elle s'applique de la même façon notamment à un disjoncteur bipolaire (comportant une phase et le neutre) ou tripolaire (sans neutre).

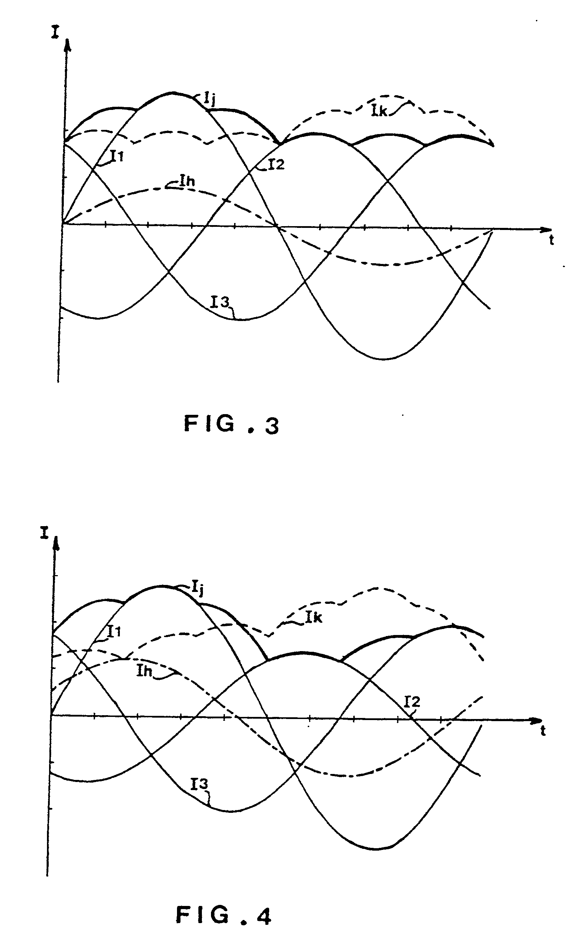

Les figures 3 et 4 illustrent, à titre d'exemple, les formes d'onde obtenues dans un disjoncteur tripolaire. Sur les figures on a représenté les courants I1, I2 et I3 dans les trois phases, le courant Ij constitué par la somme des alternances positives, le courant Ik constitué par la somme, en valeur absolue, des alternances négatives et le courant homopolaire Ih égal à la différence entre Ij et Ik.

Dans le cas de la figure 3 on a I1 = 14A, I2 = I3 = 10A tandis que dans le cas de la figure 4 on a I1 = 14A, I2 = 7A et I3 = 10A.

## Revendications

1. Déclencheur statique pour un disjoncteur électrique multipolaire de protection d'un réseau électrique à courant alternatif comprenant :
— un capteur de courant (16R, 16S, 16T, 16N) par pôle, qui engendre un signal proportionnel au courant parcourant le conducteur (R, S, T, N) associé du réseau protégé par le disjoncteur ;
— un circuit (18) de détection et de redressement auquel sont appliqués lesdits signaux pour fournir d'une part des signaux représentatifs des courants parcourant les conducteurs (R, S, T, N) à protéger et d'autre part un signal homopolaire en présence d'un défaut d'isolement ;
— un ensemble électronique de traitement (20) auquel sont appliqués les signaux de sortie du circuit (18) de détection et de redressement pour assurer des fonctions de déclenchement temporisé et/ou instantané et délivrant, avec ou sans retard, un ordre de déclenchement du disjoncteur lors du dépassement de seuils prédéterminés par les signaux représentatifs des courants parcourant les conducteurs ou par le signal homopolaire, déclencheur caractérisé en ce que le circuit (18) de détection et de redressement comporte des premiers moyens de redressement (22, 28, J) produisant un premier signal représentatif de la somme des alternances positives des signaux de sortie de l'ensemble des capteurs de courant (16), des seconds moyens de redressement (26, 24, K) produisant un second signal représentatif, en valeur absolue, de la somme des alternances négatives des signaux de sortie de l'ensemble des capteurs de courant (16), et des moyens effectuant la différence entre les premier et second signaux de somme de manière à produire ledit signal homopolaire.

2. Déclencheur selon la revendication 1, caractérisé en ce que le circuit (18) de détection et de redressement comporte un groupe de diodes (22, 24, 26, 28) associées à chaque capteur de courant, chaque groupe comportant une première (22) et une seconde (24) diodes disposées en série et dont le point commun est relié à une première sortie du capteur de courant associé, une troisième (26) et une quatrième (28) diodes disposées en série et dont le point commun est relié à une seconde sortie du capteur de courant associé, les anodes des seconde et quatrième diodes étant reliées et leur point commun connecté à un premier conducteur (30) constituant le potentiel de sortie négatif du circuit (18) de détection et de redressement, les cathodes des premières diodes (22R, 22S, 22T, 22N) des différents groupes étant reliées à un second conducteur (J) et les cathodes des troisièmes diodes (26R, 26S, 26T, 26N) des différents groupes étant reliées à un troisième conducteur (K) distinct du second, des moyens (R5, R6) effectuant la différence entre les courants circulant dans les second (J) et troisième (K) conducteurs, constituant respectivement lesdits premiers et second signaux de somme, de manière à produire ledit signal homopolaire.

3. Déclencheur selon la revendication 2, caractérisé en ce que lesdits moyens de différence comportent des première (R6) et seconde (R5) résistances de même valeur reliant respectivement les second (J) et troisième (K) conducteurs au premier conducteur (30), la différence de tension entre les second et troisième conducteurs étant représentative du courant homoplolaire dans le réseau.

4. Déclencheur selon la revendication 3, caractérisé en ce qu'un amplificateur différentiel (34, R7 à R10) est connecté entre les second et troisième conducteurs (J, K), de manière à fournir en sortie ledit signal homopolaire.

5. Déclencheur selon l'une des revendications 3 et 4 caractérisé en ce que les première (R6) et seconde (R5) résistances sont connectées au premier conducteur (30) par l'intermédiaire d'une diode Zener (ZD), la tension aux bornes de la diode Zener constituant une tension d'alimentation pour l'ensemble électronique de traitement (20).

6. Déclencheur selon l'une quelconque des revendications 2 à 5, caractérisé en ce que dans chaque groupe de diodes (22, 24, 26, 28) associé à un capteur de courant, le point commun aux anodes des seconde (24) et quatrième (28) diodes est connecté au premier conducteur (30) par l'intermédiaire d'une résistance de mesure (R1 à R4), la tension aux bornes de ladite résistance de mesure constituant le signal représentatif du courant parcourant le conducteur associé audit capteur de courant et appliqué à l'ensemble électronique de traitement (20).

7. Déclencheur selon l'une quelconque des revendications 2 à 6, comportant deux bornes test (42, 44) auxquelles peut être raccordé un simulateur de défaut susceptible d'injecter un courant continu de défaut artificiel pour contrôler le fonctionnement du déclencheur, caractérisé en ce que les bornes test (42, 44) sont respectivement reliées aux second et troisième conducteurs (J, K) de manière à ce que le courant continu injecté entre lesdites bornes ne circule que dans l'un desdits conducteurs pour permettre le fonctionnement de la fonction différentielle du déclencheur.

## Patentansprüche

1. Statischer Ausloeser fuer einen mehrpoligen elektrischen Selbstschalter zum Schutz eines elektrischen Wechselstrom-Versorgungsnetzes, welcher aufweist :
— einen Strommesser (16R, 16S, 16T, 16N) je Pol, der ein Signal erzeugt, das dem in dem jeweils angeschlossenen Leiter (R, S, T, N) des vom Selbstschalter abgesicherten Netzes fliessenden Strom proportional ist ;

— einen Detektor- und Gleichrichterschaltkreis (18), dem die genannten Signale zugefuehrt werden, zum Abgeben einerseits von Signalen, die die in den zu schuetzenden Phasenleitern (R, S, T, N) fliessenden Stroeme nachbilden, und andererseits von einem Differenzstromsignal im Fall eines Isolationsfehlers ;

— eine elektronische Verarbeitungseinheit (20), der die Ausgangssignale des Detektor- und Gleichrichterschaltkreises (18) zugefuehrt werden, um die Funktionen einer verzoegerten und-/oder unverzoegerten Ausloesung zu erfuellen, wobei sie mit oder ohne Verzoegerung einen Befehl zum Ausloesen des Selbstschalters liefert, sobald die von den die in den Leitern fliessenden Stroeme nachbildenden Signalen oder von dem Differenzstromsignal voreingestellten Schwellwerte ueberschritten werden ; Ausloeser dadurch gekennzeichnet, dass der Detektor- und Gleichrichterschaltkreis (18) erste Mittel zur Gleichrichtung (22, 28, J) vorsieht, die ein erstes, der Summe der positiven Halbwellen der Ausgangssignale aller Strommesser (16) entsprechendes Signal erzeugen, zweite Mittel zur Gleichrichtung (26, 24, K), die ein zweites, die Summe der negativen Halbwellen der Ausgangssignale aller Strommesser (16) im Absolutwert darstellendes Signal erzeugen, sowie Mittel zur Differenzbildung zwischen dem ersten und dem zweiten summierten Signal, um auf diese Weise das genannte Differenzstromsignal zu bilden.

2. Ausloeser nach Anspruch 1, dadurch gekennzeichnet, dass der Detektor- und Gleichrichterschaltkreis (18) eine Gruppe von Dioden (22, 24, 26, 28) aufweist, die an jeden Strommesser gekoppelt sind, wobei jede Gruppe eine erste (22) und eine zweite (24) Diode in Serienschaltung umfasst, deren Verbindungspunkt an einen ersten Ausgang des angeschlossenen Strommessers gekoppelt ist, eine dritte (26) und eine vierte (28) Diode in Serienschaltung, deren Verbindungspunkt an einen zweiten Ausgang des angeschlossenen Strommessers gekoppelt ist, wobei die Anoden der zweiten und vierten Diode miteinander verbunden sind und ihr Verbindungspunkt an einen ersten, das negative Ausgangspotential des Detektor- und Gleichrichterschaltkreises (18) bildenden Leiter (30) angeschlossen ist, wobei die Kathoden der ersten Dioden (22R, 22S, 22T, 22N) der verschiedenen Gruppen mit einem zweiten Leiter (J) verbunden sind und die Kathoden der dritten Dioden (26R, 26S, 26T, 26N) der verschiedenen Gruppen mit einem dritten, sich von dem zweiten unterscheidenden Leiter (K) verbunden sind ; wobei bestimmte Mittel (R5, R6) die Differenz bilden zwischen den in dem zweiten (J) und dritten (K) Leiter fliessenden, das genannte erste beziehungsweise zweite summierte Signal formenden Stroemen, um auf diese Weise das genannte Differenzstromsignal zu erzeugen.

3. Ausloeser nach Anspruch 2, dadurch gekennzeichnet, dass die genannten differenzbildenden Mittel einen ersten (R6) und einen zweiten (R5) Widerstand gleichen Wertes umfassen, die den zweiten (J) beziehungsweise den dritten (K) Leiter mit dem ersten Leiter (30) verbinden, wobei die Spannungsdifferenz zwischen dem zweiten und dem dritten Leiter den Fehlerdifferenzstrom im Netz darstellt.

4. Ausloeser nach Anspruch 3, dadurch gekennzeichnet, dass ein Differenzverstaerker (34, R7 bis R10) derart zwischen den zweiten und den dritten Leiter (J, K) geschaltet ist, dass er am Ausgang das genannte Differenzstromsignal liefert.

5. Ausloeser nach einem der Ansprueche 3 und 4, dadurch gekennzeichnet, dass der erste (R6) und der zweite (R5) Widerstand mit Hilfe einer Zenerdiode (ZD) an den ersten Leiter (30) gekoppelt sind, wobei die Klemmenspannung der Zenerdiode die Versorgungsspannung fuer die elektronische Verarbeitungseinheit (20) bildet.

6. Ausloeser nach irgendeinem der Ansprueche 2 bis 5, dadurch gekennzeichnet, dass bei jeder der an einen Strommesser gekoppelten Diodengruppen (22, 24, 26, 28) der Verbindungspunkt der Anoden der zweiten (24) und vierten (28) Diode an den ersten Leiter (30) mittels eines Messwiderstandes (R1 bis R4) gekoppelt ist, wobei die Klemmenspannung des genannten Messwiderstandes das Signal bildet, das den in dem mit dem genannten Strommesser verbundenen Leiter fliessenden Strom darstellt und der elektronischen Verarbeitungseinheit (20) zugefuehrt wird.

7. Ausloeser nach irgendeinem der Ansprueche 2 bis 6 mit zwei Testklemmen (42, 44), an die ein Fehlersimulator angeschlossen werden kann, der zur Funktionskontrolle des Ausloesers einen kuenstlichen Fehlergleichstrom einspeisen kann, dadurch gekennzeichnet, dass die Testklemmen (42, 44) mit dem zweiten (J) beziehungsweise dem dritten Leiter (K) derart verbunden sind, dass der an den genannten Klemmen eingespeiste Gleichstrom nur in einem der beiden genannten Leiter fliesst, um das Funktionieren der Differentialfunktion des Ausloesers zu erlauben.

## Claims

1. A solid-state trip device for a multipole electrical circuit breaker protecting an A.C. electrical supply system comprising :

— a current sensor (16R, 16S, 16T, 16N) per pole, which generates a signal proportional to the current flowing through the associated conductor (R, S, T, N) of the supply system protected by the circuit breaker ;

— a detection and rectification circuit (18) to which said signals are applied to supply on the one hand signals representative of the currents flowing through the conductors (R, S, T, N) to be protected and on the other hand a zero sequence signal if an insulation fault occurs,

— an electronic processing unit (20) to which the output signals from the detection and rectification circuit (18) are applied to perform delayed and/or instantaneous tripping functions and delivering, with or without a time delay, a circuit breaker tripping order when preset thresholds are exceeded by the signals representative of the currents flowing through the conductors or by the zero sequence signal, a trip device characterized by the fact that the detection and rectification circuit (18) comprises first rectification means (22, 28, J) producing a first signal representative of the sum of the positive half-waves of the output signals from the set of current sensors (16), second rectification means (26, 24, K) producing a second signal representative, in absolute value, of the sum of the negative half-waves of the output signals from the set of current sensors (16), and means effecting the difference between the first and second summed signals so as to produce said zero sequence signal.

2. The trip device according to claim 1, characterized by the fact that the detection and rectification circuit (18) comprises a group of diodes (22, 24, 26, 28) associated with each current sensor, each group comprising a first (22) and a second (24) diodes arranged in series and whose common point is connected to a first output of the associated current sensor, a third (26) and a fourth (28) diodes arranged in series and whose common point is connected to a second output of the associated current sensor, the anodes of the second and fourth diodes being connected and their common point connected to a first conductor (30) constituting the negative output potential of the detection and rectification circuit (18), the cathodes of the first diodes (22R, 26S, 22T, 22N) of the different groups being connected to a second conductor (J) and the cathodes of the third diodes (26R, 26S, 26T, 26N) of the different groups being connected to a third conductor (K) distinct from the second, and means (R5, R6) effecting the difference between the currents flowing through the second (J) and third (K) conductors, respectively constituting said first and second summed signals, so as to produce said zero sequence signal.

3. The trip device according to claim 2, characterized by the fact that said difference effecting means comprise first (R6) and second (R5) resistors of the same value respectively connecting the second (J) and third (K) conductors to the first conductor (30), the voltage difference between the second and third conductors being representative of the zero sequence current in the supply system.

4. The trip device according to claim 3, characterized by the fact that a differential amplifier (34, R7 to R10) is connected between the second and third conductors (J, K) in such a way as to supply said zero sequence signal on output.

5. The trip device according to claim 3 and 4, characterized by the fact that the first (R6) and second (R5) resistors are connected to the first conductor (30) by means of a Zener diode (ZD), the voltage at the terminals of the Zener diode providing a supply voltage for the electronic processing unit (20).

6. The trip device according to claim 2-5, characterized by the fact that in each group of diodes (22, 24, 26, 28) associated with a current sensor, the common point of the anodes of the second (24) and fourth (28) diodes is connected to the first conductor (30) by means of a measurement resistor (R1 to R4), the voltage at the terminals of said measurement resistor constituting the signal representative of the current flowing through the conductor associated with said current sensor and applied to the electronic processing unit (20).

7. The trip device according to claim 2-6, characterized by the terminals (42, 44) to which a fault simulator capable of applying an artificial D.C. fault current can be connected to test operation of the trip device, characterized by the fact that the test terminals (42, 44) are respectively connected to the second and third conductors (J, K) in such a way that the D.C. current applied between said terminals only flows through one of said conductors in order to enable the ground fault function of the trip device to operate.

FIG.1

FIG. 2

FIG . 3

FIG . 4